# EUROPEAN PATENT SPECIFICATION

(11) **EP 4 369 922 B1**
(45) Date of publication and mention of the grant of the patent: **03.09.2025**
(21) Application number: 22755317.9
(22) Date of filing: 12.07.2022
(51) Int. Cl.: A01K 61/60, A01K 75/00, B63H 8/18, F16G 11/04, F16G 11/10

(54) **BAG FOR A FISH CAGE**
BEUTEL FÜR EINEN FISCHKÄFIG
SAC POUR UN PARC À POISSONS

(30) Priority: 14.07.2021 NO 20210906
(43) Date of publication of application: 22.05.2024
(73) Proprietor: Scale Aquaculture AS, 7412 Trondheim (NO)
(72) Inventor: FURBERG, Geir, 7270 Dyrvik (NO)
(74) Representative: Acapo AS
(86) International application number: PCT/NO2022/050175
(87) International publication number: WO 2023/287300

(56) References cited:
- WO-A1-2014/189383
- WO-A1-2017/007335
- WO-A1-2017/075727
- NO-B1- 318 480
- US-A1- 2018 094 696

## Description

This invention relates to a new type of bag for a fish cage and a fish cage having such a bag.

### Background

Aquaculture has changed considerably over the years, and is now a major industry. Most of the farmed animals are still farmed in traditional fish cages at the sea, even if aquaculture based on shore is growing. A traditional fish cage at sea comprises among others a floating collar at the surface of the sea, a bag fastened to the collar and surrounding all the farmed organisms, and weights to keep the bag dilated and in shape. The bag may be made of a material having meshes, such as a net, the weight will also contribute to stretching the bag in such a way that the meshes of the net is open.

The floating collar is traditionally round and may comprise two tubes and handrail in plastic, fastened to each other by steel or plastic brackets. The weight may be any suitable weight, such as a sinker tube which may be fastened to the bag in the transition between wall and bottom. The weights are arranged on the outside of the net cage.

The bag may traditionally comprise a net wall and net bottom, the bottom may be flat or shaped as a cone. The material of the bag may be reinforced with horizontal and vertical lines, where the horizontal lines are often referred to as waistlines. Vertical lines, often denoted lifting ropes, run along the wall of the bag from the upper edge, crossing the transition from bag wall to bag bottom, and is referred to as cross ropes when being a part of the bottom. The lines are fastened to the material of the bag.

The horizontal and vertical lines may transfer the weight of the bag and any equipment installed in it to the floating collar. A fish cage bag is large and heavy, and there is a risk that just the weight of the bag itself may create ruptures of the material. By adding such lines the load carrying capacity of the bag increases, the number of lines, the type of line and the size of the lines must be calculated according to the intended use and localization of the fish cage, and is obvious to a skilled person. Further, the material of the bag may be elastic and the size of the bag may thus be expanded as a result of forces acting on it. The horizontal and vertical lines are preferably less elastic, and thus they contribute to keeping the fish cage in its intended shape.

Each vertical line and each horizontal line is a continuous piece, and crosses each other in cross points, preferably perpendicularly. In such cross points the horizontal line are attached to the vertical line either by knotting, splicing, sewing lacing or the similar. As the lines are attached to each other, any forces acting on the horizontal line will be transferred to the vertical line and vice versa, and thereby the total strength of the bag increases. However, when forces are acting on the bag, the lines will move in different directions, and the connection between the lines will experience some tear and wear.

There is a general concern in aquaculture that fish escape from the plant, often due to holes in the the bag. The holes may arise due to equipment arranged in the fish cage, wear and tear of the cage, defects or extreme weather. This is an environmental concern as farmed fish may get mixed with wild fish, but it is also an economical loss to the fish farming industry.

Many different types of fish cages are known, for instance from WO2014/189383 and WO2010/087713. However, none of these fish cages solve the problems related to wear and tear of the net. WO 2017/075727 A1 discloses a cage comprising a mooring system and a predator net, wherein vertical and horizontal lines pass through a connection device. NO 318 480 B1 discloses a bag for a fish cage, said bag having a number of horizontal lines and vertical lines. US 2018/094696 A1 discloses a connection device for connecting ropes without the need for a knot, which device comprises a number of separate attachment members.

A main object of the present invention is thus to provide a fish cage whereby the risk of rupture or a hole in the bag is reduced. Another object of the present invention is to provide a bag wherein only worn parts may be replaced. Yet another object is to provide an improved bag which may be used with existing equipment such as floating collar and sinker tube. Finally it is an object to provide a fish cage and a bag being designed for all kinds of weather and ocean currents.

### The invention

The objects are met by a bag according to claim 1 and a fish cage according to claim 5. Preferred embodiments are disclosed in the dependent claims.

The invention relates to a bag for a fish cage, having a number lines connected to the bag. The lines are running along the length and circumference of the bag, which will be vertically and horizontally once the fish cage is arranged in water, respectively. The lines crosses each other in cross points. At least one of the vertical lines running along the length of the bag comprises several parts being connected to each other by a connection device to create a continuous line along the whole length of the bag. Further, at least one of the horizontal lines comprises several parts being connected to each other by a connection device, to create a continuous line around the circumference of the bag. The parts of the at least one line running along the length of the bag are connected to the same connection device as the parts of the at least one line running along the circumference of the bag, the connection device is arranged at the cross points.

By arranging the lines in this way, they will not touch each other, and any wear between the lines will be avoided. Still, as they are connected to the same device, any forces acting on one line will be transferred to the other lines, and thus the strength of the bag is not reduced.

By "bag" it is in this patent application mainly meant the bag holding the fish inside the fish cage, but it may also be used as an external bag to the keep predators out of the fish cage. The bag is preferably made with walls and bottom, and is shaped as a circular cylinder with conical bottom. The bag may also have walls inclining towards each other without a defined bottom. When installed in a fish cage, the upper part of the bag is fastened to the floating collar, while the lower part, preferably lower part of the wall or the transition between wall and bottom, is fastened to weights, such as a sinker tube. The bag is made of a material chosen according to criteria well known to a skilled person, and the intended use. The bag is preferably made of a material having meshes with a convenient mesh width, and may also be referred to as a net cage.

By «line» it is in this patent application meant any convenient rope, strap or the similar.

By "several parts" it is in this patent application meant two or more parts, wherein each part is running from one connection device to the next. In addition the lines may comprise parts running from the connection device to the the floating collar, from the device to the weights, to the mooring or to the bottom. The number of parts will thus depend on the number of connection devices. Preferably, but not necessarily, a connection device is arranged in each cross point, and then one horizontal line will comprise a number of parts being equal to the number of vertical lines. A horizontal line is preferably arranged at the top and bottom of the bag, and therefore one vertical line will comprise a number of parts being equal to the number of horizontal lines minus one. The arrangement and number of lines is obvious to a skilled person, which also immediately will understand the number of parts necessary once the number of crossing points and connection devices are known.

As a line comprises several parts, in case any parts or lines are damaged or worn, only the affected part or parts need to be replaced, while the remaining parts and the bag may be intact.

The connection device is designed to have room for at least four lines being attached to the device, without the lines being in contact with each other. A possible shape is shaped as a ring or square, where the lines are attached to the device opposite each other.

A preferred connection device has at least four separate attachment members, one for each line. Then, at the crossing point, an end of each line is attached to a separate member of the device. The attachment members are separate from each other, meaning that parts of the device will prevent a line attached to one member to come into contact with a line attached to another member. The attachment members are preferably arranged in pairs opposite each other. The attachment members are preferably, holes, slits, apertures, loops or the similar through the material of the connection device, whereby the lines may be treaded or guided through.

The attachment between the lines and the connection device, and the shape and design of the attachment member may vary according to the use and location of the connection device, and may even be adjusted as desired. For instance, when a line carrying much load, such as a vertical or horizontal line described above, should be attached to the connection device, the member must be shaped to withstand the forces. When a line not carrying much load, or a line to be used only during installation should be attached to the connection device, the member may have a different shape and design. This will be obvious to a skilled person. The same regards the attachment to the member.

The parts of the horizontal line running along the circumference of the bag are preferably connected to the connection device at parts or members opposite to each other, and the parts of the vertical line are preferably attached to remaining opposite parts or members. By attaching the lines to the connection device in this way, the cross point will remain perpendicular and the lines will not be in direct contact with each other. Any wear and tear between the lines is thus avoided.

The end of the line being attached to the connection means is preferably bent back to the line itself and fastened to the line in such a way that a loop is created on the end of the line. The fastening of the end of the line may be performed by sewing, splicing, knotting or the similar. The fastening may further be secured by separate lines, for instance a lacing. In this way the lines will not be in contact with each other, and no tear and wear between the lines will occur. Forces will be transferred through the connection device in a similar way as in prior art where the lines are attached to each other directly.

Depending on the construction of the fish cage and the bag, more lines may be attached to the connection device. The connection device may preferably comprise more connection members, and each line is connected to a separate member.

The device is made of a sufficiently strong and preferably non-elastic material, which tolerate the harsh environments of a fish cage at sea. A preferred material is metal such as steel.

The bag is preferably made of a mesh material, more preferred of a net as used in traditional fish cages.

The lines carry the weight of the bag and possible equipment, and are preferably made of fiber rope. The lines are preferably being sewn to the material of the bag, such as a net, but other methods such as tying or knotting to the net, to the line itself or to other lines, may also be used. The lower weights of the fish cage, possibly a sinker tube maintain stretch of the bag, and keeps the lower part of the bag dilated. The vertical lines will be held straight by the weighs, and since the vertical and horizontal lines are connected to each other at the cross points, the horizontal lines will be pulled outwards, and the fish cage will be held dilated over the whole depth of the bag, and during most conditions and sea currents. If the bag is made of net, the dilation will ensure good opening of the meshes in all parts of the net cage, which will ensure good through-put of water, and thus sufficient supply of oxygen. By connecting the horizontal and vertical lines together in a connection device any tear between the lines will be reduced.

In another aspect, the invention relates to a fish cage comprising a bag as described above, having a number of lines running along the whole length and circumference of the bag. The bag and the lines are attached to a floating collar, floating at the surface of the sea once the fish cage is installed. When the lines are attached to the floating collar, the weight of the bag with equipment and all forces acting on the bag, will be transferred to the floating collar through the lines. The forces acting on the bag, or the material of the bag, will thus be reduced, and the risk for rupture is reduced.

The fish cage may preferably comprise weights, such as bottom weights, sinker tube or the corresponding, to keep the bag dilated and in correct position. These weights may be attached to the lines, or by separate additional lines attached to the connection devices. In this way, the forces from the weights will also be transferred, through the connection device, to the vertical lines, and to the floating collar without adding any forces to the bag or the material of the bag.

The vertical lines may be attached to the net continuously, or they may be running partly without attachment to the net, such as from an upper connection device to the floating collar. Preferably the lines are attached to the floating collar in such a way that the upper part of the lines are forming an inclined angle towards the net cage. In this way the forces are better distributed in the floating collar, and a stretch in the upper part of the net cage is achieved, in such a way that it is kept dilated. This may also, or in addition, be achieved by separate, additional lines attached to an upper connection device, and running to the floating collar.

When additional lines for instance as described above, are attached to the connection device, the connection device preferably comprises more attachment members, and the additional lines are attached to the members. This will ensure a good transfer of forces, less forces on the bag and a minimum or no tear and wear between the lines and the bag, or between the different lines.

A bag for a fish cage preferably has at least three horizontal lines, one at the bottom, wherein the wall and bottom are connected, one at the top, where the bag is connected to the floating collar, and at least one arranged in between. Depending on the size of the bag, more horizontal lines between the upper and lower may be arranged. The additional lines described above attached to an upper connection device, is preferably attached to the connection devices of one of the horizontal lines in the middle, and not the uppermost horizontal line.

By "floating collar" it is in this patent application meant devices at the surface of the sea holding the fish cage floating. This may be two pipes running in circle, wherein the pipes are arranged side by side, and fasten to each other by brackets. On the brackets there are often vertical bars making attachment for a handrail at the upper end. The bag is fastened to the inner side of the tubes, and the floating collar holds the bag floating.

By "sinker tube" it is in this patent application meant a device being lowered into the sea, and holding the bag dilated. The sinker tube has preferably about the same shape and diameter as one of the rings of the floating collar, and it is heavy so that the fish cage is held down and does not float up. The lower part of the bag, meaning the lower part of the wall, the bottom or the transition between wall and bottom, is fastened to the sinker tube, and the sinker tube will thus also make sure that the bag is dilated, and if the bag is made of a net, the mesh of the net will be dilated.

Further disclosed is a connection device, as described above, to be used in a bag for a fish cage. The connection device has preferably at least four attachment members, arranged in pairs being opposite each other. By "opposite" it is not necessarily meant parallel, but the members should be arranged in such a way that two lines fastened to opposite members should continue in the same direction. When two parts of a vertical line is attached to the connection device in a pair of members, both lines should continue in vertical direction. Similarly for the horizontal line, attached to the other pair of members. However, the attachment members for the horizontal line may be slightly angled to each other, as the horizontal line is curved to create a circle.

When more than four lines should be attached to the connection device, the device preferably comprises more than four attachment members. The further members should preferably be added in a third direction, or the direction wherein the line is to be fastened.

As said above, the material of the device should be sufficiently strong and preferably non-elastic, and the attachment members may be holes, slits, apertures, loops or the similar through the material of the connection device. The device is thus preferably a flat or curved piece of material with several holes, slits or apertures, and possibly having one or more bows or arcs raising above the material to create loops. As said above, the preferred material is metal, such as steel.

In the description relative terms such as front, top, center, bottom, side, lower, upper, downward, upward, outward, sideward, vertical, and horizontal etc. are all related to a fish cage having a bag as described above in a installed position in the sea i.e. when mounted and ready for use. Even though only exemplified for one side, it is to be understood that some features will correspondingly also apply for the opposite side of the device.

Reference throughout the specification to "one embodiment" or "an embodiment", "one aspect" or "an aspect" means that a particular feature, structure, or characteristic described in connection with an embodiment and/or aspect, is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

The invention will in the following be described with an example given to illustrate the invention, and should not be used to interpret the invention, as it is defined in the enclosed claims, restrictive.

### Example

The invention will in the following be described with the help of the enclosed Figures, showing a preferred embodiment of a fish cage and a device. The different parts of the figures are not necessarily to scale in relation to each other, as the figure is merely for illustrating the invention.

The invention will in the following be described with reference to the enclosed Figures, where
Fig. 1 shows a fish cage according to prior art,
Fig. 2 shows an upper part of a fish cage according the invention,
Fig. 3 shows an enlarge part of Fig. 2,
Fig. 4 shows a lower part of a fish cage according to the invention,
Fig. 5 shows a connection device from a side, and
Fig. 6 shows a connection device from another side.

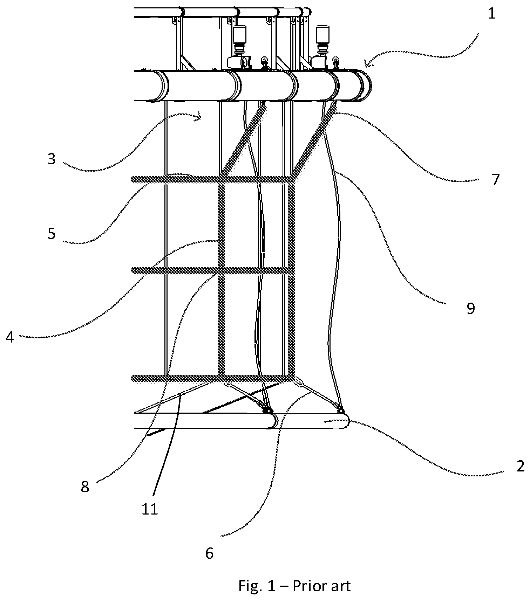

Figure 1 shows a fish cage according to prior art, having a floating collar 1 at the surface of the sea, a sinker tube 2 arranged at the bottom and a net bag 3 to keep the fish inside the fish cage. The net bag 3 comprises vertical walls and a conical bottom. Vertical lines 4, also referred to as lifting ropes, are running from the floating collar to the bottom, and horizontal lines 5, also referred to as waistlines, are running around the circumference of the net bag. The vertical lines 4, are continuing along the conical bottom, and then they may also be referred to as cross ropes 12. Both the vertical lines 4 and the horizontal lines 5 are sewn to the material of the net bag 3, and crosses each other at cross points 8. In the shown fish cage, there are four horizontal lines; one at the transition between wall and bottom, two in the middle and one at the upper part, hidden by the floating collar. A further line 6 is running from the lower horizontal line to the sinker tube, and another line 7 is running from an upper horizontal line 5, to the floating collar, to keep the net bag expanded and in position. Yet another line 9 is running from the sinker tube 2 to the floating collar 1, to be used upon elevating the sinker tube 2.

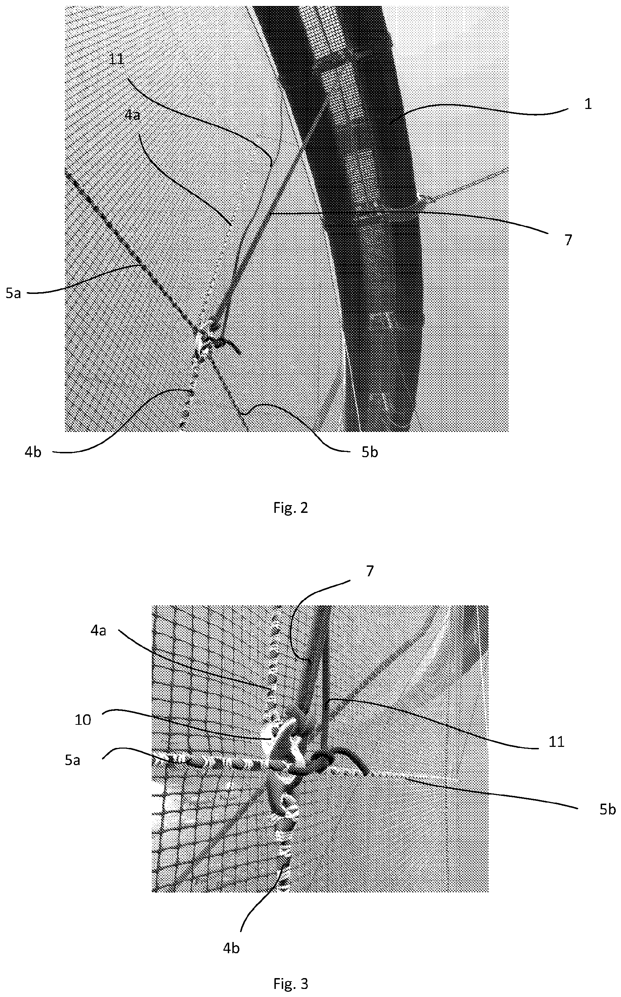

Figure 2 and Figure 3 show a fish cage which, similar to to prior art, have horizontal lines 5 running along the circumference of a bag 3, and vertical lines 4 running along the length of the bag 3, the lines are connected to the bag. The bag is attached to a floating collar 1 shown from underneath in Fig. 2. The vertical and horizontal lines comprise several parts 4a, 4b; 5a, 5b; respectively, wherein an end of each line is attached to a connection device 10 in a cross point 8. In the shown embodiment, a connection device is arranged in every cross point, and thus the parts of each line 4a, 4b; 5a, 5b, is running from one connection device, to another. The parts are connected to the bag according to prior art, for instance by sewing. The fish cage shown in figure 2, 3 and 4 further has an installation line 11, running from a horizontal line on the bag to the floating collar 1. The installation lines are used during installation of the bag and fish cage.

Figure 3 shows an enlarged detail of Fig. 2, and shows the attachment of the lines to the the connection device 10. The shown connection device comprises six different attachment members, wherein two parts of the vertical line 5, two parts of the horizontal line 4, one line 7 to the floating collar, and one installation line 11 are attached to different attachment members. The parts of the horizontal line 5a, 5b are attached to members being opposite each other, and the parts of the vertical line 4a, 4b, are also attached to members being opposite to each other, but perpendicular to the members wherein the horizontal lines 5a, 5b are attached. The lines are connected at the cross point perpendicularly, and the direction of the lines continuous through the member. By attaching the lines to the device in this way, the parts of the line and the connection device create continuous lines along both the circumference and length of the bag.

The parts of the horizontal line 5a, 5b and vertical line 4a, 4b lines, are treaded through a hole of the connection device, being the attachment member of the connection device, and turned back and fastened to itself. The ends of the lines are fastened to the line itself, by splicing, and further by lacing, to create a loop running through the device. In the shown embodiment, the attachment of the line 7 and 11 running to the floating collar, are shown as different types of knots.

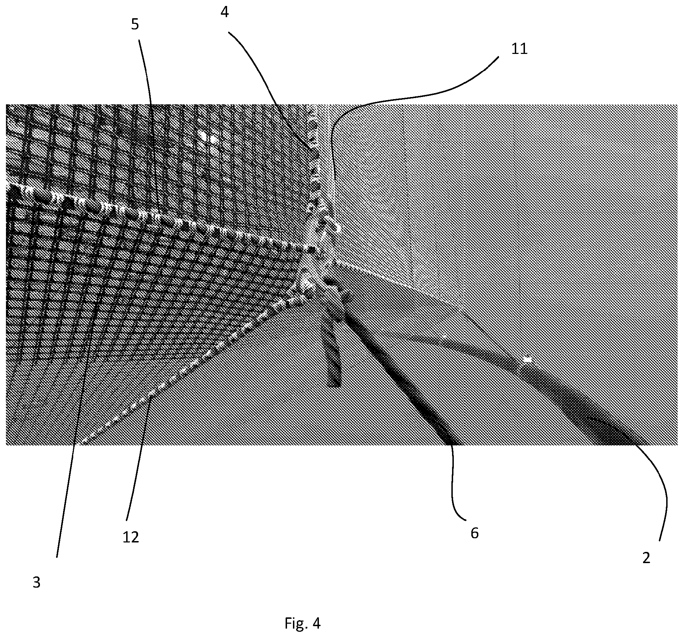

Figure 4 shows a corresponding view as Fig. 3, but at the transition between the wall and the conical bottom of the bag. The horizontal lines 5 and the vertical line 4 running along the wall, are attached to a connection device 10 as described above for Fig 3. According to prior art, and as shown in Figure 1, a cross rope 12 is running along the bottom of the bag, and in Fig. 4, the cross rope 12 is attached to the connection device 10 at a member being opposite to the member wherein the vertical line 4 is attached. In this way the direction of the vertical line 4, and the cross rope 4 will not be changed upon attachment to the device. Further, a line 6 running to the sinker tube 2 is also attached to the connection device, as well as an installation line 11.

In Figure 3 the connection device is arranged having two attachment members shown as holes facing upwards towards the floating collar 1, and in Figure 4 the connection device is arranged having two holes facing downwards away from the floating collar. This is because the different lines at each cross point may be attached to the attachment member of the connection device being most convenient, to avoid changing direction of the lines. This will be obvious to a skilled person.

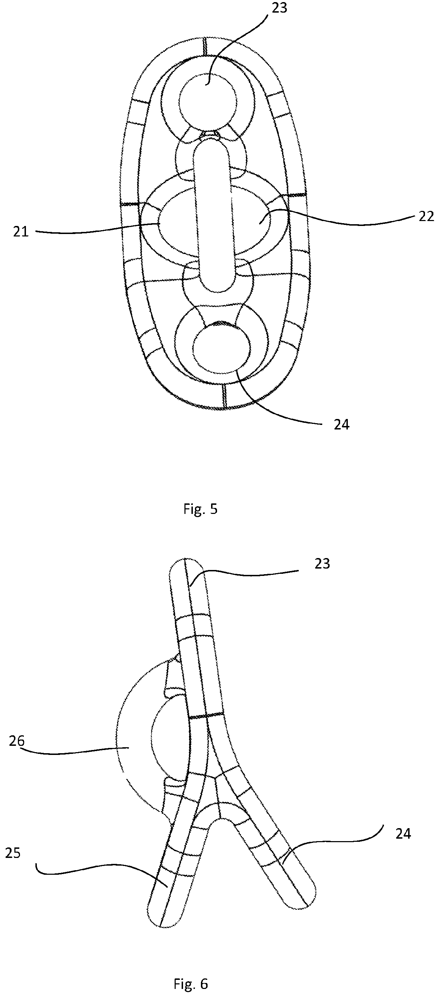

Figure 5 and 6 shows the connection device 10 in detail, from two sides being perpendicular to each other. The shown connection device have six attachment members, 21, 22, 23, 24, 25 and 26, wherein the members are arranged in two pairs 21, 22; 23, 24 being opposite each other, and the pairs are perpendicular to each other. In the shown embodiment one pair 21, 22 are at two opposite sides of a central hole through the device, while the other pair 23, 24 are two separate holes at different ends of the device. In the embodiments shown in Fig. 2 and 3, the horizontal lines are attached to the members 21, 22, and the vertical lines are attached to members 23 and 24. The connection device further comprises a member 25 in an angle to the member 24, the member is shown as a protruding part of the device having a through hole wherein a line can be threaded. In the embodiment shown in Fig. 2 and 3 the attachment member 25 is facing upwards and the line 7, running to the floating collar, is attached to it. In the embodiment shown in Fig. 4, the attachment member 25 is facing downwards and the line 11, running to the sinker tube is attached to it.

The connection device further comprises a sixth attachment member, shown as a loop 26 protruding from the pairs of members 21-24. In the shown embodiment the loop 26 is arranged above the central hole constituting member 21 and 22. In the figures the installation line 11 is attached to this member.

Even if the figures show a bag of a mesh material, the invention may be used on a bag of another material.

## Claims

1. Bag (3) for a fish cage, having a number of lines (4, 5) running along a length and a circumference of the bag, the lines are sewn, tied or knotted to a material of the bag,
**characterized in that**
- at least one of the lines (4) running along the length of the bag (3) comprise several parts (4a, 4b) being connected to each other by a connection device (10) to create a continuous line along the whole length of the bag, and
- at least one of the lines (5) running along the circumference of the bag comprise several parts (5a, 5b) being connected to each other by a connection device (10), to create a continuous line around the circumference of the bag,
wherein the parts (4a, 4b) of the at least one line (4) running along the length of the bag are connected to the same connection device (10) as the parts (5a, 5b) of the at least one line (5) running along the circumference of the bag, the connection device (10) is arranged at cross points (8) between the lines (4, 5).

2. Bag according to claim 1, **characterized in that** the connection device (10) has at least four separate attachment members (21, 22, 23, 24, 25, 26), wherein the ends of each line (4a, 4b, 5a, 5b) at the crossing point (8) is attached to a separate member of the device.

3. Bag according to claim 2, **characterized in that** the attachment members are arranged in pairs being opposite each other.

4. Bag according to claim 1 or 2, **characterized in that** further lines are attached to the connection device.

5. Fish cage having a floating collar (1), **characterized by** having a bag (3) according to any one of claims 1-4, attached to the floating collar, for containing the fish.

## Patentansprüche

1. Beutel (3) für einen Fischkäfig, der eine Anzahl von Leinen (4, 5) aufweist, die entlang einer Länge und eines Umfangs des Beutels verlaufen, wobei die Leinen an ein Material des Beutels genäht, gebunden oder geknotet sind, **dadurch gekennzeichnet, dass**
- mindestens eine der entlang der Länge des Beutels (3) verlaufenden Leinen (4) mehrere Teile (4a, 4b) umfasst, die durch eine Verbindungsvorrichtung (10) miteinander verbunden sind, um eine durchgehende Leine entlang der gesamten Länge des Beutels zu schaffen, und
- mindestens eine der Leinen (5), die entlang des Umfangs des Beutels verlaufen, mehrere Teile (5a, 5b) umfasst, die durch eine Verbindungseinrichtung (10) miteinander verbunden sind, um eine durchgehende Linie um den Umfang des Beutels zu schaffen, wobei die Teile (4a, 4b) der mindestens einen Leine (4), die entlang der Länge des Beutels verlaufen, mit derselben Verbindungsvorrichtung (10) verbunden sind, wie die Teile (5a, 5b) der mindestens einen Leine (5), die entlang des Umfangs des Beutels verlaufen, wobei die Verbindungsvorrichtung (10) an Kreuzungspunkten (8) zwischen den Leinen (4, 5) angeordnet ist.

2. Beutel nach Anspruch 1, **dadurch gekennzeichnet, dass** die Verbindungsvorrichtung (10) mindestens vier separate Anbringungselemente (21, 22, 23, 24, 25, 26) aufweist, wobei die Enden jeder Leine (4a, 4b, 5a, 5b) an dem Kreuzungspunkt (8) an einem separaten Element der Vorrichtung angebracht sind.

3. Beutel nach Anspruch 2, **dadurch gekennzeichnet, dass** die Anbringungselemente paarweise einander gegenüberliegend angeordnet sind.

4. Beutel nach Anspruch 1 oder 2, **dadurch gekennzeichnet, dass** an der Verbindungsvorrichtung weitere Leinen angebracht sind.

5. Fischkäfig, der einen schwimmenden Bund (1) aufweist, **dadurch gekennzeichnet, dass** er einen Beutel (3) nach einem der Ansprüche 1-4 aufweist, der an dem schwimmenden Bund angebracht ist, um den Fisch aufzunehmen.

## Revendications

1. Sac (3) pour une cage à poissons, ayant un certain nombre de lignes (4, 5) s'étendant le long d'une longueur et d'une circonférence du sac, les lignes sont cousues, attachées ou nouées à un matériau du
sac, **caractérisé en ce que**
- au moins l'une des lignes (4) s'étendant le long de la longueur du sac (3) comprend plusieurs parties (4a, 4b) reliées entre elles par un dispositif de connexion (10) pour créer une ligne continue sur toute la longueur du sac, et
- au moins l'une des lignes (5) s'étendant le long de la circonférence du sac comprend plusieurs parties (5a, 5b) étant reliées les unes aux autres par un dispositif de connexion (10), pour créer une ligne continue le long de la circonférence du sac, dans lequel les parties (4a, 4b) de l'au moins une ligne (4) s'étendant le long de la longueur du sac sont reliées au même dispositif de connexion (10) que les parties (5a, 5b) de l'au moins une ligne (5) s'étendant le long de la circonférence du sac, le dispositif de connexion (10) est disposé au niveau de points de croisement (8) entre les lignes (4, 5).

2. Sac selon la revendication 1, **caractérisé en ce que** le dispositif de connexion (10) comporte au moins quatre éléments de fixation séparés (21, 22, 23, 24, 25, 26), dans lequel les extrémités de chaque ligne (4a, 4b, 5a, 5b) au point de croisement (8) sont fixées à un élément séparé du dispositif.

3. Sac selon la revendication 2, **caractérisé en ce que** les éléments de fixation sont disposés par paires en étant opposés l'un à l'autre.

4. Sac selon la revendication 1 ou 2, **caractérisé en ce que** d'autres lignes sont fixées au dispositif de connexion.

5. Cage à poissons ayant un collier flottant (1), **caractérisée par** le fait d'avoir un sac (3) selon l'une quelconque des revendications 1 à 4, fixé au collier flottant, pour contenir le poisson.
